# EUROPEAN PATENT APPLICATION

(11) **EP 2 511 458 A1**
(43) Date of publication of application: **17.10.2012**
(21) Application number: 11162615.6
(22) Date of filing: 15.04.2011
(51) Int. Cl.: E05C 17/28, B62D 25/10

(54) **A connection mechanism for an engine hood**

(71) Applicant: Tofas Turk Otomobil Fabrikasi Anonim Sirketi, 16369 Bursa (TR)
(72) Inventor: Kara, Kadir, 16369, Bursa (TR)
(74) Representative: Dericioglu, Ekin

(57) **Abstract**

The present invention relates to a connection mechanism (1) comprising at least one support bar (2) one end of which is fixed to the vehicle's engine hood (M), a slideway (3) wherein the end part of the support bar (2) which is not fixed to the engine hood (M) moves therein during opening and closing of the engine motor (M), an actuating mechanism (4) which is located on the end of the support bar (2) which is not fixed to the engine hood (M) and moves inside the slideway (3) during opening and closing of the engine hood (M), a lock mechanism (5) which is located on the part of the slideway (3) which is close to the engine hood (M) and prevents the actuating mechanism (4) from moving towards the other end of the slideway (3) by automatically holding the actuating mechanism (4) when the engine hood (M) is completely opened

## Description

### Field of the Invention

The present invention relates to a connection mechanism which is used in the engine hoods of the vehicles.

### Background of the Invention

Today, support bars are used to keep the engine hoods in open position when the said hoods are opened for any reason such as the failures occurring in the vehicles.

The parts of the support bars which are located both on the engine hood and the vehicle body cannot function as a result of misuse or improper use. And as a result of this injuries and/or material damage in the vehicle occur.

United States patent document no. US2009134302, an application known in the state of the art, discloses an engine hood which is produced especially for the engines of the heavy construction equipment.

Korean patent document no KR20020039767, an application known in the state of the art, discloses a support bar which enables the engine hoods of the vehicles to open and close easily.

### Summary of the Invention

The objective of the present invention is to realize a self-locked connection mechanism which decreases the accident risks.

Another objective of the present invention is to realize a connection member which has high strength.

### Detailed Description of the Invention

"A Connection Mechanism for an Engine Hood" realized to fulfill the objective of the present invention is illustrated in the accompanying figures, in which:
Figure 1 is the perspective view of the mounted state to the vehicle of the inventive connection member.
Figure 2 is the front view of the inventive connection mechanism.
Figure 3 is the lateral view of the inventive connection mechanism.

The components illustrated in the figure are individually numbered where the numbers refer to the following:
1. Connection mechanism
2. Support bar
3. Slideway
4. Actuating mechanism
   41. Tube
   42. First roller
   43. Second roller
5. Lock mechanism
   51. Wedge
   52. Slot
6. Hinge
M. Engine Hood
G. Body

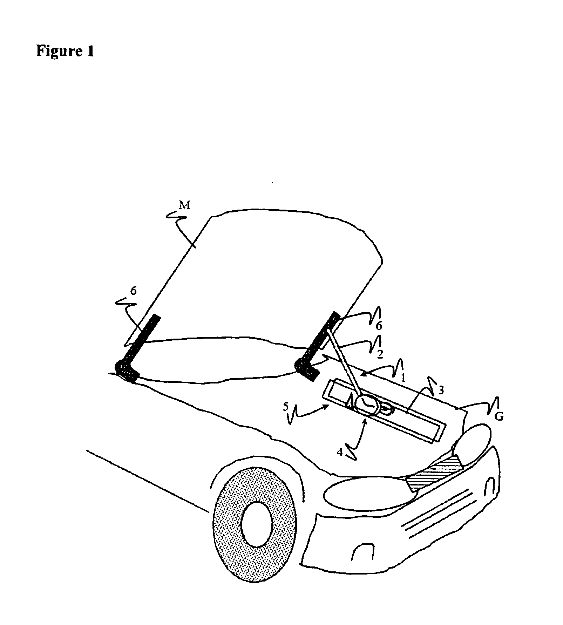

The inventive connection mechanism (1) essentially comprises:
- at least one support bar (2) one end of which is fixed to the vehicle's engine hood (M),
- at least one slideway (3) which is located on the vehicle body (G) and wherein the end part of the support bar (2) which is not fixed to the engine hood (M) moves during opening and closing of the engine motor (M),
- at least one actuating mechanism (4) which is located on the end of the support bar (2) which is not fixed to the engine hood (M) and moves inside the slideway (3) during opening and closing of the engine hood (M), and
- at least one lock mechanism (5) which is located on the part of the slideway (3) which is close to the engine hood (M) and prevents the actuating mechanism (4) from moving towards the other end of the slideway (3) and thus prevents the engine hood (M) from closing by automatically holding the actuating mechanism (4) when the engine hood (M) is completely opened (Figure 1).

The one end of the support bar (2) which is located in the inventive connection mechanism (1) is fixed to the engine hood (M). Preferably at least one hinge (6) is used to fix the one end of the support bar (2) to the engine hood (M) in the inventive connection mechanism (1).

The actuating mechanism (4) which is located on the end of the support bar (2) which is not fixed to the engine hood (M) moves inside the slideway (3) during opening and closing of the engine hood (M). In the preferred embodiment of the invention, the slideway (3) has "C" shape.

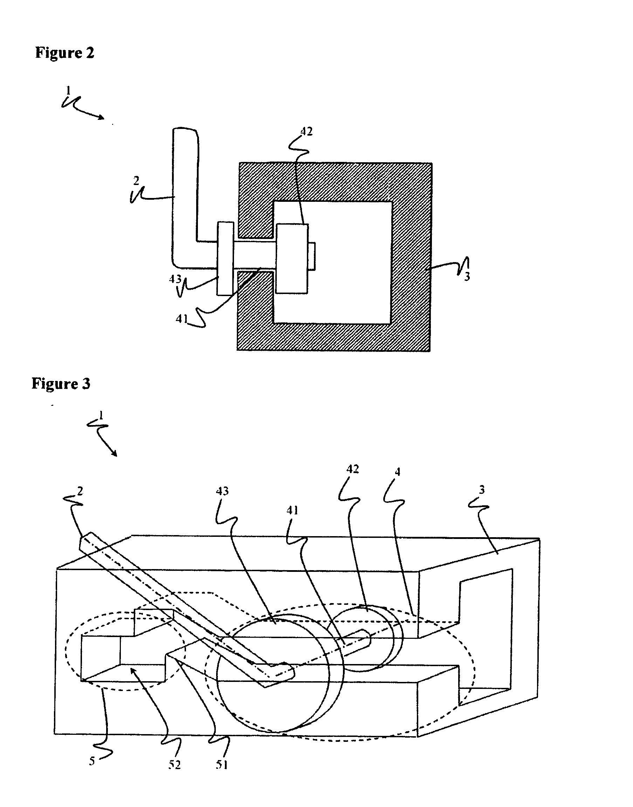

The actuating mechanism (4) has at least one tube (41) which is placed perpendicular to the end of the support bar (2) which is not fixed to the engine hood (M) and one end of which extends inside the slideway (3) and the other end which intersects with the support bar (2) extends outside the slideway (3); at least one first roller (42) which is placed to the end of the tube (41) extending inside the slideway (3) and at least one second roller (43) which is placed towards the end of the tube (41) intersecting the support bar (2) (Figure 2). The rollers (42 and 43) move along the slideway (3) by rotating circularly around their own axis such that the tube (41) will be the center and enable the end of the support bar (2) which is not fixed to the engine hood (M) to approach and move away from the lock mechanism (M) and the engine hood (M) to be opened and closed by this means. The tube (41) is preferably is cylindrical and enables the rollers (42 and 43) to regularly move circularly along the slideway (3).

The actuating mechanism (5) moves from one end of the slideway (3) towards the other end while the engine hood (M) is opening and the lock mechanism (5) automatically holds the actuating mechanism (4) which is located at the end of the slideway (3) at the moment that the engine hood (M) is fully opened. The lock mechanism (5) has at least one wedge (51) which is placed to the part of the slideway (3) close to the engine hood (M) and at least one slot (52) which is located between the wedge (51) and the engine hood (M) (Figure 3). The wedge (51) preferably is in the form of right triangle and one of its right edges faces towards the engine hood (M) and its inclined edge faces towards the slideway (3). The actuating mechanism (4) approaches to the engine hood (M) while the engine hood (M) is opening and when the engine hood (M) is fully opened, the actuating mechanism (4) fits into the slot (52) by passing the inclined surface of the wedge (51). The wedge (51) holds the actuating mechanism (4) by means of its right edge, prevents the actuating mechanism (4) from moving towards the other end of the slideway (3) by passing itself and enables the actuating mechanism (4) to remain locked in the slot (52). By this means the engine hood (M) is prevented from closing unintendedly. The said wedge (51) and the slot (52) serve as a secure locking. In order to close the engine hood (M) again, the actuating mechanism (4) is released from the wedge (51) and moved in opposite direction on the slideway (3) and the engine hood (M) is closed.

The inventive connection mechanism (1) decreases the accident risks resulting from the user by means of its automatically locking structure. The said connection mechanism (1) remains securely where it is locked and does not become loose from its place without the user's preference.

Within the framework of this basic concept, it is possible to develop various embodiments of the inventive connection mechanism (1). The invention can not be limited to the examples described herein; it is essentially according to the claims.

## Claims

1. A connection mechanism (1) essentially **comprising**
- at least one support bar (2) one end of which is fixed to the vehicle's engine hood (M),
- at least one slideway (3) which is located on the vehicle body (G) and wherein the end part of the support bar (2) which is not fixed to the engine hood (M) moves during opening and closing of the engine motor (M), and **characterized by**
- at least one actuating mechanism (4) which is located on the end of the support bar (2) which is not fixed to the engine hood (M) and moves inside the slideway (3) during opening and closing of the engine hood (M), and
- at least one lock mechanism (5) which is located on the part of the slideway (3) which is close to the engine hood (M) and prevents the actuating mechanism (4) from moving towards the other end of the slideway (3) and thus prevents the engine hood (M) from closing by automatically holding the actuating mechanism (4) when the engine hood (M) is completely opened.

2. A connection mechanism (1) according to claim 1, **characterized by** at least one hinge (6) which is used to fix the one end of the support bar (2) to the engine hood (M).

3. A connection mechanism (1) according to claim 1 or 2, **characterized by** slideway (3) which has "C" shape.

4. A connection mechanism (1) according to any of the preceding claims, **characterized by** actuating mechanism (4) has at least one tube (41) which is placed perpendicular to the end of the support bar (2) which is not fixed to the engine hood (M) and one end of which extends inside the slideway (3) and the other end which intersects with the support bar (2) extends outside the slideway (3); at least one first roller (42) which is placed to the end of the tube (41) extending inside the slideway (3) and at least one second roller (43) which is placed towards the end of the tube (41) intersecting the support bar (2).

5. A connection mechanism (1) according to claim 4, **characterized by** actuating mechanism (4) having rollers (42 and 43) which move along the slideway (3) by rotating circularly around their own axis such that the tube (41) will be the center and enable the end of the support bar (2) which is not fixed to the engine hood (M) to approach and move away from the lock mechanism (M) and the engine hood (M) to be opened and closed by this means.

6. A connection mechanism (1) according to claim 4 or claim 5, **characterized by** actuating mechanism (4) having a tube (41) which is cylindrical and enables the rollers (42 and 43) to regularly move circularly along the slideway (3).

7. A connection mechanism (1) according to any of the preceding claims, **characterized by** lock mechanism (5) having at least one wedge (51) which is placed to the part of the slideway (3) close to the engine hood (M) and at least one slot (52) which is located between the wedge (51) and the engine hood (M).

8. A connection mechanism (1) according to claim 7, **characterized by** lock mechanism (5) having preferably a wedge (51) which is in a right triangle shape and one right edges of which faces the engine hood (M) and the inclined edge of which faces the slideway (3).

9. A connection mechanism (1) according to claim 7 or claim 8, **characterized by** actuating mechanism (4) which approaches to the engine hood (M) while the engine hood (M) is opening, and fits into the slot (52) by passing the inclined surface of the wedge (51) when the engine hood (M) is fully opened.

10. A connection mechanism (1) according to claims 7 to 9, **characterized by** lock mechanism (5) having a wedge (51) which holds the actuating mechanism (4) by means of its right edge, prevents the actuating mechanism (4) from moving towards the other end of the slideway (3) by passing itself and enables the actuating mechanism (4) to remain locked in the slot (52), and by this means prevents the engine hood (M) from closing unintendedly.

## Amended claims

### Amended claims in accordance with Rule 137(2) EPC.

**1.** A connection mechanism (1) essentially comprising
- at least one support bar (2) one end of which is fixable to the vehicle's engine hood (M), and **characterized by**
- at least one slideway (3) which can be located on the vehicle body (G) and wherein the end part of the support bar (2) which is not fixed to the engine hood (M) moves during opening and closing of the engine hood (M) and which has a "C" shaped form
- at least one actuating mechanism (4) which is located on the end of the support bar (2) which is not fixed to the engine hood (M) and has at least one tube (41) which is placed perpendicular to the end of the support bar (2) which is not fixed to the engine hood (M) and one end of which extends inside the slideway (3) and the other end which intersects with the support bar (2) extends outside the slideway (3); at least one first roller (42) which is placed to the end of the tube (41) extending inside the slideway (3) and at least one second roller (43) which is placed towards the end of the tube (41) intersecting the support bar (2),
- at least one lock mechanism (5) which is located on the part of the slideway (3) which is close to the engine hood (M) and prevents the actuating mechanism (4) from moving towards the other end of the slideway (3) and thus prevents the engine hood (M) from closing by automatically holding the actuating mechanism (4) when the engine hood (M) is completely opened,
- at least one hinge (6) which is used to fix one end of the support bar (2) to the engine hood (M).

**2.** A connection mechanism (1) according to Claim 1, **characterized by** the actuating mechanism (4) which moves from one end of the slideway (3) towards the other end while the engine hood (M) is opening and which is held by the lock mechanism (5) which is located at the end of the slideway (3) at the moment that the engine hood (M) is fully opened.

**3.** A connection mechanism (1) according to any of the preceding claims, **characterized by** the actuating mechanism (4) which, in order to close the engine hood (M) again, is released from the wedge (51) and moved in opposite direction on the slideway (3) and thereby enables the engine hood (M) to be closed.

**4.** A connection mechanism (1) according to any of the preceding claims, **characterized by** actuating mechanism (4) having rollers (42 and 43) which move along the slideway (3) by rotating circularly around their own axis such that the tube (41) will be the center and enable the end of the support bar (2) which is not fixed to the engine hood (M) to approach and move away from the lock mechanism (M) and the engine hood (M) to be opened and closed by this means.

**5.** A connection mechanism (1) according to any of the preceding claims, **characterized by** actuating mechanism (4) having a tube (41) which is cylindrical and enables the rollers (42 and 43) to regularly move circularly along the slideway (3).

**6.** A connection mechanism (1) according to any of the preceding claims, **characterized by** lock mechanism (5) having at least one wedge (51) which is placed to the part of the slideway (3) close to the engine hood (M) and at least one slot (52) which is located between the wedge (51) and the engine hood (M).

**7.** A connection mechanism (1) according to any of the preceding claims, **characterized by** lock mechanism (5) having preferably a wedge (51) which is in a right triangle shape and one right edges of which faces the engine hood (M) and the inclined edge of which faces the slideway (3).

**8.** A connection mechanism (1) according to any of the preceding claims, **characterized by** actuating mechanism (4) which approaches to the engine hood (M) while the engine hood (M) is opening, and fits into the slot (52) by passing the inclined surface of the wedge (51) when the engine hood (M) is fully opened.

**9.** A connection mechanism (1) according to any of the preceding claims, **characterized by** lock mechanism (5) having a wedge (51) which holds the actuating mechanism (4) by means of its right edge, prevents the actuating mechanism (4) from moving towards the other end of the slideway (3) by passing itself and enables the actuating mechanism (4) to remain locked in the slot (52), and by this means prevents the engine hood (M) from closing unintendedly.
